# EUROPÄISCHE PATENTSCHRIFT

(11) **EP 0 484 721 B1**
(45) Veröffentlichungstag und Bekanntmachung des Hinweises auf die Patenterteilung: **03.05.1995**
(21) Anmeldenummer: 91117894.5
(22) Anmeldetag: 21.10.1991
(51) Int. Cl.: B29C 47/06, B29C 47/12

(54) **Verfahren und Vorrichtung zur Extrusion von Hohlkammerplatten aus thermoplastischem Kunststoff**
Method and apparatus for extruding hollow thermoplastic panels
Procédé et dispositif pour l'extrusion de panneaux à structure creuse en matière thermoplastique

(30) Priorität: 30.10.1990 DE 9014968 U
(43) Veröffentlichungstag der Anmeldung: 13.05.1992
(73) Patentinhaber: Röhm GmbH, 64293 Darmstadt (DE)
(72) Erfinder: Gross, Heinz, Dr.-Ing., W-6101 Rossdorf 1 (DE); Fetzer, Andreas, W-6101 Bickenbach (DE)

(56) Entgegenhaltungen:
- EP-A- 0 097 247
- EP-A- 0 210 504
- DE-A- 2 654 671
- FR-A- 1 489 312
- FR-A- 2 142 752
- FR-A- 2 364 753
- US-A- 3 235 439
- US-A- 3 764 245
- US-A- 3 816 204

## Beschreibung

Die Erfindung betrifft ein Verfahren und eine Vorrichtung zur Herstellung von extrudierten Hohlkammerplatten aus thermoplastischem Kunststoff, enthaltend zwei ebene Außenwände und diese verbindenende Stege.

### Stand der Technik

Derartige Hohlkammerplatten werden gewöhnlich einstückig aus einer Düse, die zwei parallele Austrittsschlitze zur Erzeugung der Außenwände und eine Vielzahl von Querschlitzen zur Ausbildung der Stege enthält, extrudiert. Die auf diese Weise erzeugten Hohlkammerplatten weisen in der äußeren Oberfläche der Außenwände an den Stellen, wo an der Innenseite die Stege ansetzen, sogenannte Einfallstellen auf. Es handelt sich um flache, sich in Extrusionsrichtung erstreckende Vertiefungen, die dadurch entstehen, daß sich die Stege bei der thermischen Kontraktion während der Abkühlung zusammenziehen und dabei eine Zugkraft auf die Außenwänden ausüben. Ein weiterer Nachteil der bekannten extrudierten Hohlkammerplatten besteht darin, daß sich auf ihrer Oberfläche alle Ungleichmäßigkeiten in der Beschaffenheit der Düsenlippen und in Extrusionsgeschwindigkeit durch Längs- bzw. Querwellen abzeichnen, die die Durchsicht stören. Sie werden auch als Ziehriefen bzw. Rattermarken bezeichnet.

Die Einfallstellen führen beim Einbau der Hohlkammerplatten in starre Rahmen zu verschiedenen Nachteilen. Der Klemmdruck, der von dem Rahmenprofil auf die Hohlkammerplatte einwirkt, wird nicht von den Stegen aufgenommen, sondern von den Außenwänden und erst von diesen auf die Stege übertragen. Dadurch entstehen in den Außenwänden unmittelbar neben den Stegansätzen hohe Scher- oder Biegespannungen, die allmählich zu Rißbildung und Bruch führen. Außerdem bilden sich beim Einbau in starre Rahmenprofile an den Einfallstellen Undichtigkeiten zwischen der Oberfläche der Hohlkammerplatte und dem Rahmenprofil, so daß Wasser in den Rahmen eindringen kann.

Aus der amerikanischen Patentschrift 3 247 039 ist ein Extrusionsverfahren bekannt, bei dem aus zwei parallelen Schlitzdüsen zwei Bahnen aus thermoplastischem Kunststoff und zwischen ihnen aus oszillierenden Düsen gewellte Stege extrudiert werden (Fig. 5). Auf eine nicht dargestellte Weise werden die Bahnen und die gewellten Stege im thermoplastischen Zustand zu Hohlkammerplatten verbunden.

Um Hohlkammerplatten mit im wesentlichen ebenen Außenwänden und gleichmäßiger Dicke zu erzeugen, ist es unerläßich, die Außenwände während der Abkühlung in Kontakt mit parallelen ebenen Kühlflächen zu halten. Dazu verwendet man gewöhnlich, wie z.B. in DE-C 32 44 953 oder EP-B 158 951 beschrieben, einen Vakuumformkanal. Da die Haftung zwischen den Wänden des Vakuumformkanals und dem thermoplastischen Kunststoff gering ist, wird die Bildung von Einfallstellen nicht verhindert, wenn das Extrusionsverfahren gemäß der amerikanischen Patentschrift 3 247 039 in Verbindung mit einem Vakuumformkanal ausgeübt wird.

Beim Verfahren gemäß der amerikanischen Patentschrift 3 816 204, bei dem zwei extrudierte Bahnen aus thermoplastischem Kunststoff nicht mit durchgehenden Stegen, sondern mit einzelnen Querfäden verbunden werden, extrudiert man die Bahnen auf zwei kontinuierlich umlaufende Endlosbänder als Zwischenträger, die ihrerseits über Kühlflächen laufen. Nach dem Anbinden der Querfäden wird die erzeugte Hohlkammerplatte gekühlt. Auch bei diesem Verfahren entstehen an den Ansatzpunkten der Querfäden zwangsläufig Einfallstellen.

Aus der EP-B 210 504 ist ein Verfahren bekannt, bei dem zur Herstellung einer Hohlkammerplatte in einer Doppelbandanlage Bahnen aus thermoplastischem Kunststoff auf umlaufende Endlosbänder, die auf die Schmelzetemperatur erhitzt sind, durch Extrusion aufgetragen werden. Die Bahnen werden nacheinander mit vorgefertigten Stegen, die eine Temperatur unterhalb ihrer Erweichungstemperatur haben und von Vorratsrollen entnommen werden, in Berührung gebracht, wobei sie an den Bahnen anhaften. Anschließend durchlaufen die synchron bewegten Endlosbänder eine Kühlzone, in der die erzeugte Hohlkammerbahn unter die Erweichungstemperatur gekühlt wird. Am Ende der Doppelbandanlage tritt der Strang aus und kann zu Hohlkammerplatten zerteilt werden.

Wenn auch bei diesem Verfahren Einfallstellen an den Stegansätzen und extrusionsbedingte Wellungen der Oberfläche vermieden werden, bedeutet die getrennte Herstellung der Stege einen höheren apparativen Aufwand als die einstufige Extrusion des Hohlprofils. Darüberhinaus ist es schwierig, eine feste Verbindung der kalten Stege mit den thermoplastischen Bahnen zu erreichen.

### Aufgabe und Lösung

Der Erfindung liegt die Aufgabe zugrunde, die Bildung von Einfallstellen bei der Herstellung von Hohlkammerplatten aus thermoplastischen Kunststoff in einem einstufigen Extrusionsverfahren weitgehend oder vollständig zu verhindern und eine einwandfreie Verbindung zwischen den Stegen und der Außenwänden zu gewährleisten. Weiterhin sollen Unregelmäßigkeiten der Oberflächen, wie Quer- und Längswellen, vermieden werden.

Zur Lösung der gestellten Aufgabe geht die Erfindung von dem zuletzt beschriebenen Verfahren zur Herstellung einer Hohlkammerplatte aus, bei dem durch Extrusion von zwei die Außenwände bildenden Bahnen aus thermoplastischem Kunststoff auf zwei in Abzugsrichtung bewegte erhitzte Zwischenträger und Verbinden der an dem Zwischenträger haftenden Bahnen mit Stegen aus thermoplastischen Kunststoff eine Hohlkammerstruktur gebildet, abgekühlt und von dem Zwischenträger abgelöst wird.

Erfindungsgemäß werden zur Bildung der Stege Stränge aus thermoplastischem Kunststoff extrudiert und ihre Köpfe im schmelzflüssigen Zustand mit beiden an den erhitzten Zwischenträgern haftenden Bahnen in Berührung gebracht und mit diesen verschweißt.

Eine wesentliche Wirkung der erfindungsgemäßen Arbeitsweise besteht darin, daß die flachen Bahnen, aus denen die Außenwände der Hohlkammerplatten gebildet werden, beim Aufbringen auf den heißen Zwischenträger an diesem haften. Die Zugkräfte, die durch thermische Kontraktion der Stege beim Abkühlen auf die Ansatzstellen ausgeübt werden, führen nicht zu Einfallstellen, weil die Außenwände an dem Zwischenträger festgehalten werden.

Die bei der Extrusion gegebenenfalls entstandenen Quer- und Längswellen werden in Berührung mit dem glättenden Zwischenträger vollkommen ausgegelichen. Bei der Abkühlung nimmt die Oberfläche des Hohlkammerstanges die Negativform der Oberfläche des Zwischenträgers an. Wenn dieser eine ebene, glänzende Oberfläche hat, so entsteht ein Hohlkammerstrang mit einer ebensolchen Oberfläche. Andererseits läßt sich jede beliebige erwünschte andere Oberflächenstruktur verwirklichen, wenn man einen Zwischenträger mit der entsprechenden negativen Oberflächerstruktur verwendet.

Im Vergleich zu herkömmliche Extrusionsverfahren mit einer gemeinsamen Düse für das Hohlprofil hat das erfindungsgemäße Extrusionsverfahren mehrere Vorteile. Man erreicht nach dem Anfahren der Anlage schneller den vollen Betriebszustand. Wegen der geringeren Reibungskräfte ist in der Regel eine höhere Extrusionsgeschwindigkeit möglich. Die Dicke der Außenwände läßt sich mit üblichen Stellmitteln auf gewünschte Werte einstellen und konstant halten.

Zur näheren Erläuterung der Erfindung dienen die Figuren 1 bis 3.
**Figur 1** zeigt einen Querschnitt durch eine erfindungsgemäße Extrusionsanlage mit Glättwerk.
**Figur 2** zeigt in der gleichen Darstellungsweise eine weitere Ausführungsform.
**Figur 3** zeigt im Schnittbild eine Detaildarstellung der Extrusionsdüse zur Bildung der Stege.

Zur Herstellung der Hohlkammerplatten können thermoplastische Kunststoffe verwendet werden, die extrudierbar und bei Raumtemperatur steif und formbeständig sind. Glasklare Kunststoffe sind bevorzugt. Typische Beispiele sind PMMA, PC, PVC, PS, ABS, PE, PP. Die Abmessungen können dem Verwendungszweck entsprechend gewählt werden. Die Breite kann z.B. 500 bis 2500 mm, die Dicke 5 bis 50 mm betragen. Die Außenwände und die Stege haben vorzugsweise etwa gleiche Dicken; sie betragen zweckmäßig etwa 1/10 bis 1/20 der Gesamtdicke.

### Beschreibung einer bevorzugten Ausführungsform

Der Zwischenträger hat eine ausreichende Steifigkeit und Oberflächenbeschaffenheit, um eine ebene und glatte Oberfläche der Hohlkammerplatte zu gewährleisten. Als Zwischenträger dienen vorzugsweise um Umlenkwalzen 11, 12 kontinuierlich umlaufende Endbänder 10. Sie werden durch eine ausreichende Spannung zwischen den Umlenkwalzen 11 und 12 in ebener Lage gehalten, so daß sie den gegebenenfalls von dem anhaftenden Hohlkammerstrang ausgehenden Zugkräften nicht merklich nachgeben. Die Umlenkwalzen 11 bzw. 12 werden durch einen Antrieb 13 synchron gegenläufig in Pfeilrichtung gedreht, so daß die Endlosbänder 10 mit einer gleichförmigen, an die Extrusionsgeschwindigkeit angepaßten Geschwindigkeit vorwärtsbewegt werden. Die Vorrichtungen und Betriebsbedingungen stimmen auf beiden Seiten der Bahn in der Regel vollständig überein, so daß eine zu ihrer Mittelebene vollkommen symmetrische Hohlkammerbahn 14 gebildet wird.

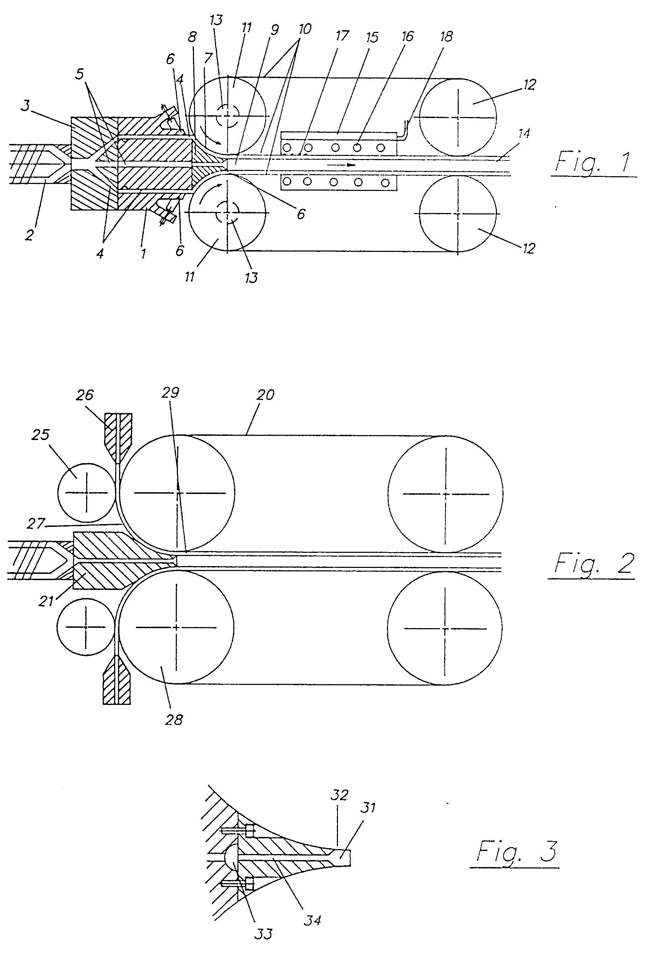

Zur Extrusion der Außenwände und der Stege können getrennte Extrusionsdüsen verwendet werden. Bei der Vorrichtung gemäß Figur 1 sind jedoch alle Extrusionsdüsen in einem gemeinsamen Werkzeug 1 zusammengafaßt, das in den Walzenspalt zwischen den Umlenkwalzen 11 hineinragt. Es wird bei der dargestellten Ausführungsform von einem Extruder 2 gespeist, dessen Extrudat in einem Adapter 3 in drei Stränge geteilt wird. Die äußeren Stränge 4 dienen zur Bildung der Außenwände, der innere Strang 5 zur Bildung der Stege. Es ist grundsätzlich möglich, diese Stränge aus mehreren Extrudern einzuspeisen; in diesem Falle können für die einzelnen Stränge unterschiedliche, miteinander verschweißbare thermoplastische Formmassen verwendet werden.

Aus den in üblicher Weise verstellbaren, z.B. als Flexlippe ausgebildeten Düsenlippen 6 werden zur Bildung der Außenwände flache Bahnen 7 von gleichförmiger Dicke extrudiert und unmittelbar auf die Oberflächen der um die Umlenkwalzen 11 laufenden Endlosbänder 10 aufgebracht. Die Umlenkwalzen 11 sind auf eine Temperatur im thermoplastischen Zustandsbereich des extrudiereten Kunststoffes beheizt und übertragen diese Temperatur auf die darauf laufenden Endlosbänder. Die Formmasse klebt unter diesen Bedingungen an der Oberfläche des Endlosbandes an und wird mit diesem in den Walzenspalt transportiert.

Im Bereich des Walzenspalts läuft das Werkzeug 1 in eine Extrusionsdüse 8 aus, die durch einen Stegkamm in eine Mehrzahl von Einzeldüsen zur Extrusion einzelner Stege unterteilt ist. Zu jeder Einzeldüse verläuft von einem gemeinsamen Verteilerkanal 33 ein Massekanal 34. Die Stege bzw. die zu ihrer Bildung dienenden Kernstücke 31 des Stegkammes können in jeder gebräuchlichen Stellung, z.B. zickzack-förmig, angeordnet sein. Bevorzugt stehen sie senkrecht zu den Außenwänden in Abständen von der einfachen bis zur dreifachen Dicke des Hohlprofils. Sie können untereinander gegebenenfalls durch eine Mittelebene, die aus einem entsprechende Schlitz in dem Stegkamm extrudiert wird, verbunden sein.

Im Walzenspalt treten die Stege als thermoplastische Stränge jeweils aus einem Düsenmund 32 in dem Stegkamm aus. Es ist vorteilhaft, wenn die Kernstücke 31, die benachbarte Einzeldüsen voneinander trennen, ein wenig über den Düsenmund 32 hinausragen, wie aus Figur 3 ersichtlich. Diese Gestaltung bewirkt, daß die Formmasse nicht nur in Extrusionsrichtung, sondern auch in Richtung auf die an den Endlosbändern haftenden Stränge 7 gelenkt wird. Dadurch entsteht an den Berührungsstellen zwischen den Stegsträngen und den Bahnen 7 ein gewisser Druck, der eine gute Verschmelzung der Stränge gewährleistet.

Die zwischen den Endlosbändern 10 geführte Hohlkammerbahn 14 wird durch Wärmeabführung durch die Endlosbänder unter die Erweichungstemperatur abgekühlt. Die Endlosbänder bestehen daher aus einem Werkstoff von ausreichender Wärmeleitfähigkeit und Wärmebeständigkeit, vorzugsweise aus Metall, insbesondere aus nichtrostendem Stahl. Die Oberfläche kann hochglänzend poliert oder in anderer gewünschter Weise strukturiert, beispielsweise mattiert sein.

Zur Wärmeabführung aus der extrudierten Hohlkammerbahn dienen Kühlplatten 15 mit Kanälen 16, durch die ein Kühlmittel strömt. Um das Endlosband 10 in einem guten Kontakt mit der Kühlplatte 15 zu halten und um die Endlosbänder in einem festgelegten, gleichbleibenden Abstand zu führen, können die Kühlplatten mit Vakuumkanälen 17 versehen sein, die mit einer Vakuumleitung 18 in Verbindung stehen.

Wenn die Oberflächen der Hohlkammerbahn unter die Erweichungstemperatur abgekühlt sind, lösen sie sich von selbst von den Endlosbändern, so daß diese an den Umlenkrollen 12 ohne weiteres von der Oberfläche des Extrudats abgenommen werden können. Sobald die Bahn über ihre ganze Dicke unter die Erweichungstemperatur abgekühlt ist, kann sie mit einer nicht dargestellten Trennvorrichtung in Hohlkammerplatten gewünschter Länge zerteilt werden.

Um Markierungen des Extrusionsprozesses auf beiden Seiten der Außenwände zu vermeiden und dadurch eine noch bessere Durchsicht durch die Hohlkammerplatte zu erreichen, kann eine Vorrichtung gemäß Figur 2 verwendet werden. Sie unterscheidet sich von der Vorrichtung gemäß Figur 1 dadurch, daß die Stränge 27 zur Bildung der Außenwände in einem größeren Abstand vom Walzenspalt 29 aus getrennten Schlitzdüsen 26 auf die Endlosbänder 20 extrudiert werden, so daß sie an Glättwalzen 25 vorbeigeführt werden können. Die Glättwalzen 25 werden mittels eines durch die hohlen Achsen strömenden Kühlmittels auf eine Temperatur unterhalb der Erweichungstemperatur des thermoplastischen Kunststoffes gekühlt. Beim Durchtritt durch den an der Glättwalze 25 gebildeten Walzenspalt wird die anliegende Seite der Bahnen 27 geglättet und bis dicht unter die Erweichungstemperatur gekühlt, während die an den Endlosbändern 20 haftende Seite im thermoplastischen Zustand verbleibt.

Die Düse 21 dient bei dieser Ausführungsform ausschließlich zur Bildung der Stege und enthält zu diesem Zweck einen Stegkamm entsprechend Figur 3. Die im Walzenspalt 29 austretenden Teilstränge müssen so heiß sein, daß sie mit der bereits abgekühlten Oberfläche der Bahnen 27 verschweißen. Die weitere Behandlung des Hohlkammerstranges entspricht derjenigen in der Vorrichtung gemäß Figur 1.

## Patentansprüche

1. Verfahren zur Herstellung einer Hohlkammerplatte, enthaltend zwei ebene Außenwände und diese verbindende Stege, durch Extrusion von zwei die Außenwände bildenden Bahnen aus thermoplastischem Kunststoff auf zwei in Abzugsrichtung bewegte, auf eine Temperatur im thermoplastischen Zustandsbereich des Kunststoffes erhitzte Zwischenträger und Verbinden der an den Zwischenträgern haftenden Bahnen mit einer Mehrzahl von Stegen aus Kunststoff zu einem Hohlkammerstrang, Abkühlung des Hohlkammerstranges unter die Erweichungstemperatur und Ablösung von dem Zwischenträger,
dadurch gekennzeichnet,
daß zur Bildung der Stege Stränge aus thermoplastischem Kunststoff extrudiert und ihre Kanten im schmelzflüssigen Zustand mit beiden an den erhitzten Zwischenträgern haftenden Bahnen in Berührung gebracht und mit diesen verschweißt werden.

2. Verfahren nach Anspruch 1, dadurch gekennzeichnet, daß die Stegkanten zu einem Zeitpunkt mit den Bahnen in Berührung gebracht werden, zu dem die zwischen den Kanten liegende Stegfläche die Extrusionsdüse noch nicht verlassen hat.

3. Verfahren nach Anspruch 1, dadurch gekennzeichnet, daß als Zwischenträger ein kontinuierlich umlaufendes Endlosband eingesetzt wird.

4. Verfahren nach Anspruch 3, dadurch gekennzeichnet, daß das Endlosband zu dem Zeitpunkt bzw. an der Stelle, an der die Bahnen zur Bildung der Außenwände aufgebracht werden, mittels einer beheizten Umlenkwalze, über die das Endlosband läuft, auf eine Temperatur im thermoplastischen Zustandsbereich des Kunststoffes erhitzt wird.

5. Vorrichtung zur Durchführung des Verfahren nach den Ansprüchen 1 bis 3, enthaltend Extrusionsdüsen (6,26) zur Herstellung von flachen Bahnen zur Bildung der Außenwände des Hohlkammerstranges sowie Extrusionsdüsen (8,21) zur Herstellung von Strängen zur Bildung von die Außenwände verbindenden Stegen, in Abzugsrichtung bewegbare Zwischenträger (10,20) zur Aufnahme der thermoplastischen Bahnen, Mittel (15) zur Erhitzung und Kühlung der Zwischenträger, Mittel (12) zur Abtrennung der Zwischenträger von dem abgekühlten Hohlkammerstrang,
dadurch gekennzeichnet,
daß die Extrusionsdüsen (8,21) zur Bildung der Stege so angeordnet sind, daß die Kanten der austretenden schmelzflüssigen Stränge mit den an den Zwischenträgern (10,20) haftenden Bahnen in Berührung treten.

6. Vorrichtung nach Anspruch 5, dadurch gekennzeichnet, daß die Extrusionsdüsen (8,21) zur Bildung der Stege über den Düsenmund hinausragende Kernstücke enthalten.

7. Vorrichtung nach Anspruch 6, dadurch gekennzeichnet, daß sie als Zwischenträger zwei um Umlenkwalzen laufende Endlosbänder (10,20) enthält, die auf einem Teil ihres Umlaufweges parallel im Abstand der Dicke des Hohlkammerstranges und mit gleicher Geschwindigkeit bewegt werden.

8. Vorrichtung nach Anspruch 7, dadurch gekennzeichnet, daß sie als Mittel zum Erwärmen der Endlosbänder beheizbare Umlenkwalzen (11,28) enthält.

9. Vorrichtung nach einem oder mehreren der Ansprüche 5 bis 8, dadurch gekennzeichnet, daß zwischen den Extrusionsschlitzdüsen (26) zur Bildung der flachen Bahnen und dem Walzenspalt (29) mit den Umlenkwalzen (28) zusammenwirkende, kühlbare Glättwalzen (25) angeordnet sind.

## Claims

1. A process for preparing a cavity plate, comprising two flat outer walls and crosspieces connecting said walls, by extruding two sheets which form the outer walls and are made of a thermoplastic material onto two intermediate supports heated to a temperature within the thermoplastic range of the plastic material, and connecting the sheets adhering to the intermediate supports by means of a plurality of plastic crosspieces to form a cavity strand, cooling of the cavity strands below the softening temperature and separation from the intermediate support, characterised in that strands made of a thermoplastic material are extruded to form the crosspieces and that the edges thereof, when in the viscous state, are brought into contact with the two sheets adhering to the heated intermediate supports, and are bonded thereto.

2. A process according to claim 1, characterised in that the edges of the crosspieces are brought into contact with the sheets at a time when the area of the crosspiece positioned between the edges has not yet left the extrusion die.

3. A process according to claim 1, characterised in that a continuously revolving endless belt is used as an intermediate support.

4. A process according to claim 3, characterised in that the endless belt is heated to a temperature within the thermoplastic range of the plastic material at the time or spot at which the sheets are applied in order to form the outer walls, using a heated guide roller over which the endless belt runs.

5. A device for carrying out the process according to claims 1 to 3, comprising extrusion dies (6, 26) for producing flat sheets in order to form the outer walls of the cavity strand, as well as extrusion dies (8, 21) for producing strands in order to form the crosspieces connecting the outer walls, and comprising intermediate carriers (10, 20), which are movable in the discharge direction, for receiving the thermoplastic sheets, means (15) for heating and cooling the intermediate supports and means (12) for separating the intermediate supports from the cooled-down cavity strand, characterised in that the extrusion dies (8, 21) for forming the crosspieces are arranged such that the edges of the issuing, viscous strands come into contact with the sheets adhering to the intermediate supports (10, 20).

6. A device according to claim 5, characterised in that the extrusion dies (8, 21) for forming the crosspieces contain core parts which project beyond the opening of the die.

7. A device according to claim 6, characterised in that it comprises two endless belts (10, 20) revolving about guide rollers as intermediate supports, which belts are moved in parallel and at the same speed over a part of their rotational path, the spacing of the belts from one another being the thickness of the cavity strand.

8. A device according to claim 7, characterised in that it comprises heatable guide rollers (11, 28) as means for heating the endless belts.

9. A device according to one or more of claims 5 to 8, characterised in that coolable smoothing rollers (25) which cooperate with the guide rollers (28) are arranged between the extrusion slot dies (26) in order to form the flat sheets and the roller clearance (29).

## Revendications

1. Procédé de fabrication d'une plaque alvéolaire, comprenant deux parois extérieures planes et des entretoises reliant celles-ci, par extrusion de deux nappes en matière synthétique thermoplastique, constituant les parois extérieures, sur deux supports intermédiaires entraînés en mouvement dans la direction d'écoulement et chauffés à une température dans la gamme correspondant à l'état thermoplastique de la matière synthétique, et par union des nappes adhérant aux supports intermédiaires à une multiplicité d'entretoises en matière synthétique pour former un boudin alvéolaire, après quoi le boudin alvéolaire est refroidi au-dessous de la température de ramollissement et il est détaché du support intermédiaire,
caractérisé en ce que, pour la formation des entretoises, des boudins de matière synthétique thermoplastique sont extrudés et leurs bords sont mis en contact, à l'état fondu, avec les deux nappes adhérant aux supports intermédiaires chauffés et ils sont soudés à ces deux nappes.

2. Procédé selon la revendication 1, caractérisé en ce que les bords des entretoises sont mis en contact avec les nappes à un moment auquel la surface de ces entretoises située entre ces bords n'a pas encore quitté la filière d'extrusion.

3. Procédé selon la revendication 1, caractérisé en ce qu'on utilise, comme support intermédiaire, une bande sans fin qui tourne de façon continue.

4. Procédé selon la revendication 3, caractérisé en ce qu'au moment ou à l'endroit où les nappes sont posées sur elle pour la formation des parois extérieures, la bande sans fin est chauffée à une température dans la gamme correspondant à l'état thermoplastique de la matière synthétique, au moyen d'un rouleau de renvoi chauffé sur lequel passe la bande sans fin.

5. Dispositif pour l'exécution du procédé selon l'une quelconque des revendications 1 à 3, comprenant des filières d'extrusion (6, 26) pour la formation de nappes planes destinées à constituer les parois extérieures du boudin alvéolaire, ainsi que des filières d'extrusion (8, 21) pour la formation de boudins destinés à constituer des entretoises reliant les parois extérieures, des supports intermédiaires (10, 20) mobiles dans la direction de l'écoulement pour la réception des nappes thermoplastiques, des moyens (15) pour le chauffage et le refroidissement des supports intermédiaires, des moyens (12) pour séparer les supports intermédiaires du boudin alvéolaire refroidi,
caractérisé en ce que les filières d'extrusion (8, 21) pour la formation des entretoises sont disposées de telle sorte que les bords des boudins qui sortent à l'état fondu entrent en contact avec les nappes adhérant aux supports intermédiaires (10, 20).

6. Dispositif selon la revendication 5, caractérisé en ce que les filières d'extrusion (8, 21) pour la formation des entretoises contiennent des pièces de noyau qui font saillie sur l'orifice de filière.

7. Dispositif selon la revendication 6, caractérisé en ce qu'il comprend, en tant que supports intermédiaires, deux bandes sans fin (10, 20) qui passent sur des rouleaux de renvoi et qui, sur une partie de leur trajet, se déplacent parallèlement, espacées l'une de l'autre d'une distance égale à l'épaisseur du boudin alvéolaire, et à la même vitesse.

8. Dispositif selon la revendication 7, caractérisé en ce qu'il comprend, en tant que moyens pour le chauffage des bandes sans fin, des rouleaux de renvoi chauffables (11, 28).

9. Dispositif selon l'une quelconque des revendications 5 à 8, caractérisé en ce que des cylindres à lisser refroidissables (25), coopérant avec les rouleaux de renvoi (28), sont disposés entre les filières plates d'extrusion (26) pour la formation des nappes planes et la fente de pincement (29) entre ces rouleaux.
